(19) Europäisches Patentamt

European Patent Office

Office européen des brevets

(11) **EP 4 667 438 A1**

(12) **EUROPEAN PATENT APPLICATION**

(43) Date of publication:
**24.12.2025 Bulletin 2025/52**

(21) Application number: **24201982.6**

(22) Date of filing: **23.09.2024**

(51) International Patent Classification (IPC):
**C04B 28/02** *(2006.01)*       **C04B 28/14** *(2006.01)*
**C04B 28/18** *(2006.01)*

(52) Cooperative Patent Classification (CPC):
(C-Sets available)
**C04B 28/18; C04B 28/02; C04B 28/14**       (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2024   US 202463662700 P
30.08.2024   US 202463688946 P**

(71) Applicants:
• **SAINT-GOBAIN PLACO
92400 Courbevoie (FR)**

• **GCP Applied Technologies Inc.
Malvern, PA 19355 (US)**

(72) Inventors:
• **NIETO BARTOLOME, Pablo
28002 Madrid (ES)**
• **DOMINGUEZ MARTINEZ, Alejandro
28002 Madrid (ES)**
• **DIAZ AGUILERA, Gonzalo
08110 MONTCADA I REIXAC (ES)**
• **MORGAN, Michael D.
WORCESTER, 01615-0137 (US)**

(74) Representative: **Saint-Gobain Recherche
41 Quai Lucien Lefranc
93300 Aubervilliers (FR)**

(54) **LIGHTWEIGHT PLASTER WITH POLYSTYRENE BEADS**

(57)     According to one aspect, a method of preparing a plaster comprises preparing a dry mix composition comprising a hydratable binder and polymer beads, the polymer beads having a mean equivalent particle diameter of no greater than 2.5 mm and at least one of the following:
1) an aspect ratio of no greater than 1.5:1;
2) an equivalent particle diameter standard deviation of no greater than 0.3 mm;
3) a circularity of at least 0.85;
4) an open cell content of no greater than 50%; or
5) a packing density of at least 9 g/L.
    The process for preparing the plaster continues with mixing the dry mix composition with water to prepare a wet mix composition, applying the wet mix composition to a surface of a substrate, allowing the wet mix composition to dry to form a plaster.

EP 4 667 438 A1

(52) Cooperative Patent Classification (CPC): (Cont.)

C-Sets
**C04B 28/18, C04B 7/02, C04B 22/143,
C04B 16/08, C04B 22/148**

**Description**

**FIELD OF THE DISCLOSURE**

The present invention relates to dry mix and wet mix compositions for lightweight plaster, kits for preparing lightweight plasters, lightweight plasters, and methods of making the lightweight plasters.

**BACKGROUND**

Lightweight plasters are common construction materials used for coating or treating the surfaces or walls of buildings or other constructions. Known lightweight plasters typically include lightweight fillers such as shredded polystyrene or exfoliated vermiculite, dispersed within a hydratable binder such as gypsum or Portland cement.

Exemplary plasters including shredded polystyrene are described in US Patent No. US 5,352,390, 4,751,024, 3,719,573, and 3,839,059. Unfortunately, shredded polystyrene tends to have fine particles that can clump into undesirable aggregates. Further, the large particle size range within batches of shredded polystyrene can be undesirable. Lastly, the shredding step can be energy intensive.

Already formed polystyrene beads can provide an excellent alternative to shredded polystyrene and other common lightweight fillers for lightweight plaster. The inventors have found polystyrene beads of a particular shape and size provide for plasters with excellent process ability, mechanics, homogeneity, and pumpability.

**SUMMARY**

The present invention relates to a dry mix composition which comprises a hydratable binder and polymer beads, the polymer beads having a mean equivalent particle diameter of no greater than 2.5 mm and at least one of the following:

　　1) an aspect ratio of no greater than 1.5:1;
　　2) an equivalent particle diameter standard deviation of no greater than 0.3 mm;
　　3) a circularity of at least 0.85;
　　4) an open cell content of no greater than 50%; or
　　5) a packing density of at least 9 g/L.

The dry mix composition can be mixed with water to form a wet mix composition. The present invention also relates to such wet mix composition. The wet mix can be applied to a substrate and allowed to dry to form a plaster.

The present invention also relates to a kit which comprises a dry mix as defined herein and an accelerator composition.

The present invention also relates to a plaster which comprises a binder and polymer beads, the polymer beads having a mean equivalent particle diameter of no greater than 2.5 mm and at least one of the following:

　　1) an aspect ratio of no greater than 1.5:1;
　　2) an equivalent particle diameter standard deviation of no greater than 0.3 mm;
　　3) a circularity of at least 0.85;
　　4) an open cell content of no greater than 50%; or
　　5) a packing density of at least 9 g/L.

The present invention also relates to a method of preparing a plaster, where said method comprises:

-　preparing a dry mix composition as defined herein, (i.e. said dry mix composition comprising a hydratable binder and polymer beads, the polymer beads having a mean equivalent particle diameter of no greater than 2.5 mm and at least one of the following:

　　1) an aspect ratio of no greater than 1.5:1;
　　2) an equivalent particle diameter standard deviation of no greater than 0.3 mm;
　　3) a circularity of at least 0.85;
　　4) an open cell content of no greater than 50%; or
　　5) a packing density of at least 9 g/L);

-　mixing the dry mix composition with water to prepare a wet mix composition,
-　applying the wet mix composition to a surface of a substrate,

- allowing the wet mix composition to dry to form a plaster.

The present invention also relates to a plaster made by a method as defined herein. The present invention also relates to a plaster formed from a dry mix composition as defined herein.

## BRIEF DESCRIPTION OF THE DRAWINGS

The present disclosure may be better understood, and its numerous features and advantages made apparent to those skilled in the art by referencing the accompanying drawings.

FIG. 1 displays a Scanning Electron Microscopy (SEM) image of an exemplary non-shredded expanded polystyrene bead according to an embodiment of the present invention.
FIG. 2 displays an SEM image of an exemplary shredded expanded polystyrene.
FIG. 3 shows an exemplary process for preparing a lightweight plaster according to an embodiment of the present invention.

## DETAILED DESCRIPTION

In an aspect of the invention, disclosed herein is a dry mix composition comprising a hydratable binder and polymer beads according to various embodiments of the present invention.

In an embodiment of the dry mix composition, the polymer beads can have any suitable composition. In an embodiment the polymer beads can comprise an expanded polymer, a non-expanded polymer, or a combination thereof. In an embodiment, the polymer beads comprise polystyrene. In another embodiment, the polymer beads comprise an expanded polystyrene, a non-expanded polystyrene, or a combination thereof. In an embodiment, the polymer beads substantially consist of expanded polystyrene. As used herein, substantially refers to at least 99.9% by weight or volume (e.g., a composition substantially consisting of component Y comprises at least 99.9 wt. % component Y or 99.9 vol. % of component Y; a composition substantially free of component X comprises no greater than 0.01 wt. % component X or 0.01 vol. % component X). Hence, polymer beads substantially consisting of expanded polystyrene refers to polymer beads comprising at least 99.9% by weight or volume of polystyrene. In another embodiment, the polymer beads can consist of polystyrene. In an embodiment, the polymer beads comprise a non-shredded polymer bead. In another embodiment, the polymer beads can comprise a non-shredded polystyrene bead. In yet another embodiment, the polymer beads can comprise or consist of a non-shredded expanded polystyrene bead. In some embodiments, the polymer beads can comprise a non-shredded unexpanded polystyrene bead. In some other embodiments, the polymer beads can comprise a mixture of non-shredded expanded and unexpanded polystyrene beads.

The polymer beads can have a particular mean equivalent particle diameter. The mean equivalent particle diameter, as used herein, can be determined according to the following process. Particles are scanned with 2D Scanner and analyzed with Image software like Image J. The equivalent particle diameter d of each particle is calculated as

$$d = 2\sqrt{\frac{A}{\pi}}$$

with A being the surface area of the particle, calculated from the image with the image analysis software. It represents the diameter of a perfect circle having the same surface area as the 2D image of the particle. The mean equivalent diameter is based on the particle count i.e., they are not weighted by particle volume or mass.

In an embodiment, the polymer beads can have a mean equivalent particle diameter of no greater than 2.5 mm or no greater than 2.4 mm or no greater than 2.3 mm or no greater than 2.2 mm or no greater than 2.1 mm or no greater than 2.0 mm or no greater than 1.9 mm or no greater than 1.8 mm. In another embodiment, the polymer beads can have a mean equivalent particle diameter of at least 0.001 mm or at least 0.01 mm or at least 0.1 mm or at least 1.0 mm or at least 1.1 mm or at least 1.2 mm or at least 1.3 mm or at least 1.4 mm or at least 1.5 mm. It will be appreciated that the mean equivalent particle diameter can be in between any of the minimum and maximum values noted above, including for example, but not limited to, at least 0.001 mm and no greater than 2.5 mm or at least 1.0 mm and no greater than 2.1 mm.

In an embodiment, the polymer beads can have a particular equivalent particle diameter standard deviation. In an embodiment, the polymer beads can have an equivalent particle diameter standard deviation of no greater than 0.3 mm or no greater than 0.28 mm or no greater than 0.26 mm or no greater than 0.24 mm or no greater than 0.22 mm or no greater than 0.20 mm or no greater than 0.18 mm. In another embodiment, the polymer beads can have an equivalent particle diameter standard deviation of at least 0.001 mm or at least 0.01 mm or at least 0.1 mm. It will be appreciated that the equivalent particle diameter standard deviation can be in between any of the minimum and maximum values noted above, including for example, but not limited to, at least 0.001 mm and no greater than 0.24 mm or at least 0.01 mm and no greater than 0.18 mm.

In an embodiment, the polymer beads can have a particular length (L), width (W), and aspect ratio. As used herein, the length refers to the longest possible dimension of a bead, the thickness refers to the shortest measurable dimension measured orthogonally from the length, and the aspect ratio refers to the ratio of the length: width (L: W). In an embodiment, the aspect ratio of the polymer beads can be no greater than 5: 1 or no greater than 4:1 or no greater than 3: 1 or no greater than 2: 1 or no greater than 1.5: 1 or no greater than 1.3:1 or no greater than 1.1:1 or no greater than 1.05: 1 or no greater than 1.01:1. In an embodiment, the polymer beads can have an aspect ratio of at least 1:1.

In an embodiment, the polymer beads can have a particular circularity. In an embodiment, the polymer beads can have a circularity of at least 0.85 or at least 0.86 or at least 0.87 or at least 0.88 or at least 0.89. In an embodiment, the polymer beads can have a circularity of no greater than or equal to 1 or no greater than 1.

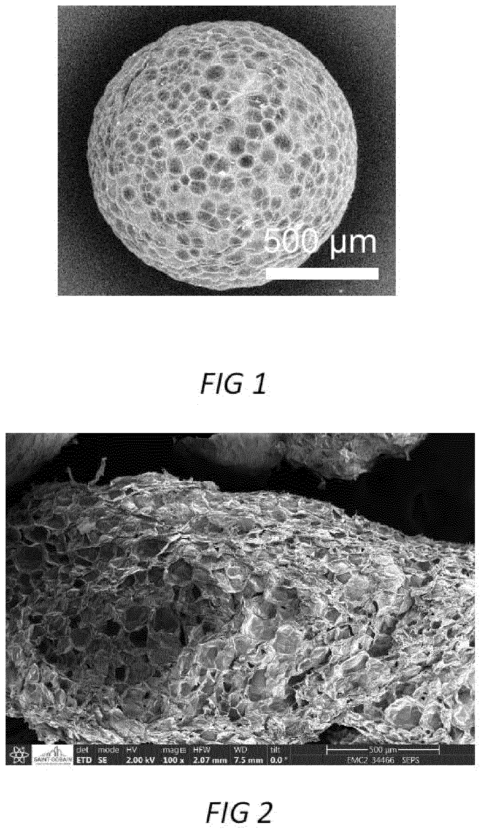

In an embodiment, the polymer beads can have any suitable open cell content. In an embodiment, the polymer beads can have an open cell content of no greater than 50% or no greater than 45% or no greater than 40% or no greater than 35% or no greater than 30% or no greater than 25% or no greater than 20% or no greater than 15% or no greater than 10% or no greater than 5% or substantially no open cell content. An SEM image of the surface of an exemplary expanded polystyrene bead having no open cell content can be seen in FIG. 1. An SEM image of a shredded expanded polystyrene bead with open cell content can be seen in FIG. 2.

In an embodiment, the polymer beads have a packing density of at least 10 g/L or at least 11 g/L or at least 12 g/L or at least 13 g/L. In an embodiment, the polymer beads have a packing density of no greater than 100 g/L or no greater than 90 g/L or no greater than 80 g/L or no greater than 70 g/L or no greater than 60 g/L.

In an embodiment, the dry mix composition comprises at least 0.001 wt. % polymer beads or at least 0.01 wt. % polymer beads or at least 0.1 wt. % polymer beads or at least 0.5 wt. % polymer beads or at least 1 wt. % polymer beads or at least 1.5 wt. % polymer beads or at least 2 wt. % polymer beads or at least 2.5 wt. % polymer beads or at least 3 wt. % polymer beads, based on a total weight of the dry mix composition. In an embodiment, the dry mix composition comprises no greater than 50 wt. % polymer beads or no greater than 40 wt. % polymer beads or no greater than 30 wt. % polymer beads or no greater than 20 wt. % polymer beads or no greater than 15 wt. % polymer beads or no greater than 10 wt. % polymer beads or no greater than 7 wt. % polymer beards, based on a total weight of the dry mix composition. It will be appreciated that the polymer bead content of the dry mix composition may be between any of the minimum and maximum values noted above, including for example, but not limited to, at least 0.1 wt. % and no greater than 50 wt. % polymer beads or at least 2 wt. % and not greater than 20 wt. % polymer beads.

In an embodiment, the hydratable binder can have any suitable composition. In an embodiment, the dry mix hydratable binder comprises gypsum (calcium sulfate hemihydrate), cement (e.g. Portland cements, Calcium Aluminate cements, Calcium Sulfoaluminate cements, belite cements), lime, or a combination thereof. In an embodiment, the hydratable binder may comprise no greater than 5 wt. % cement or no greater than 4 wt. % cement, or no greater than 3 wt. % cement, or no greater than 2 wt. % cement, or no greater than 1 wt. % cement, or no greater than 0.5 wt. % cement, or no greater than 0.1 wt. % cement. In an embodiment, the hydratable binder does not include cement.

In an embodiment, the dry mix composition comprises at least 70 wt. % hydratable binder or at least 72 wt. % hydratable binder or at least 74 wt. % hydratable binder or at least 76 wt. % hydratable binder or at least 78 wt. % hydratable binder or at least 80 wt. % hydratable binder or at least 82 wt. % hydratable binder or at least 84 wt. % hydratable binder or at least 85 wt. % hydratable binder, based on a total weight of the dry mix composition. In an embodiment, the dry mix composition comprises no greater than 99 wt. % hydratable binder or no greater than 95 wt. % hydratable binder, based on a total weight of the dry mix composition. It will be appreciated that the hydratable binder content of the dry mix composition may be between any of the minimum and maximum values noted above, including for example, but not limited to, at least 72 wt. % and no greater than 99 wt. % hydratable binder or at least 72 wt. % and not greater than 95 wt. % hydratable binder.

In an embodiment, the dry mix composition can further comprise a fibrous component. In an embodiment, the fibrous component comprises cellulose fibers, glass fibers, or a combination thereof. In an embodiment, the fibrous component can comprise 0-20 wt. % cellulose or 4-20 wt. % cellulose, based on a total weight of the dry mix composition. In an embodiment, the fibrous component can comprise 0-2 wt. % glass fibers, based on a total weight of the dry mix composition.

In an embodiment, the dry mix composition can also comprise a foaming agent. In an embodiment, the foaming agent can comprise sodium alpha olefin sulfonates, sulfonated monoglycerides, sodium alkyl arylsulfonate, sodium laurel sulfate, or a combination thereof. In an embodiment, the dry mix composition can comprise 0.1-5% by wt. foaming agent, based on a total weight of the dry mix composition.

In an embodiment, the dry mix composition can comprise a clay. In an embodiment, the clay can comprise attapulgite, sepiolite, bentonite, illite, or a combination thereof. In an embodiment the dry mix composition comprises 1 to 12 wt. % clay or 4 to 8 wt. % clay.

In an embodiment, the dry mix composition can comprise reactive filler. In an embodiment, the reactive filler can be calcium carbonate or sodium bicarbonate or a combination thereof. In an embodiment, the reactive filler can have a particle size (based on max sieve size) of 1 to 500 microns. In an embodiment, the reactive filler can have a particle size (based on max sieve size) of 10 to 20 microns.

In an embodiment, the dry mix composition can comprise 1-10 wt. % reactive filler. In an alternative embodiment, the dry mix can comprise 3-5 wt. % reactive filler.

In an embodiment, the dry mix composition can comprise a lightweight filler in addition to the polymer beads. In an embodiment, the lightweight filler can comprise expanded perlite, expanded vermiculite, shredded expanded polystyrene, stone wool, expanded glass beads, cenospheres, micronized rubber, or a combination thereof. In an embodiment, the dry mix can contain no greater than 5 wt. % lightweight filler other than polystyrene beads, or no greater than 4 wt. % lightweight filler, or no greater than 3 wt. % lightweight filler, or no greater than 2 wt. % lightweight filler, or no greater than 1 wt. % lightweight filler, or no greater than 0.5 wt. % lightweight filler, or no greater than 0.1 wt. % lightweight filler. In an alternative embodiment, the dry mix may contain no lightweight fillers besides polymer or polystyrene beads.

In an embodiment, the dry mix composition can comprise an inert filler in addition to the polymer beads and optional lightweight filler. In an embodiment, the filler can comprise dolomite, limestone, sand, silica, bauxite or a combination thereof. In an alternative embodiment, the dry mix may contain no fillers besides polymer or polystyrene beads.

In an embodiment, the dry mix composition can comprise an additive. In an embodiment, the additive can comprise, fire resistive aggregates, flake mica, a super absorbent polymer, or a combination thereof. In an embodiment, the dry mix can contain no greater than 5 wt. % aggregates other than polystyrene beads, or no greater than 4 wt. % aggregates, or no greater than 3 wt. % aggregates, or no greater than 2 wt. % aggregates, or no greater than 1 wt. % aggregates, or no greater than 0.5 wt. % aggregates, or no greater than 0.1 wt. % aggregates. Aggregates, as used herein, refers to inert materials such as fillers (e.g. limestone and/or dolomitic fillers; inert minerals under 63 $\mu$m (based on max sieve size)) or sands (between 63 $\mu$m and 4 mm (based on max sieve size)) including the lightweight fillers in the above paragraphs.

In an embodiment, the dry mix can contain no greater than 5 wt. % inert filler other than polystyrene beads, or no greater than 4 wt. % inert filler, or no greater than 3 wt. % inert filler, or no greater than 2 wt. % inert filler, or no greater than 1 wt. % inert filler, or no greater than 0.5 wt. % inert filler, or no greater than 0.1 wt. % inert filler other than polystyrene beads.

In an embodiment, the dry mix can contain no greater than 5 wt. % sand, or no greater than 4 wt. % sand, or no greater than 3 wt. % sand, or no greater than 2 wt. % sand, or no greater than 1 wt. % sand, or no greater than 0.5 wt. % sand, or no greater than 0.1 wt. % sand.

In an embodiment, the dry mix density can have a particular dry bulk density. In an embodiment, the dry mix can have a dry bulk density of 15 to 16 lbs./f$^3$.

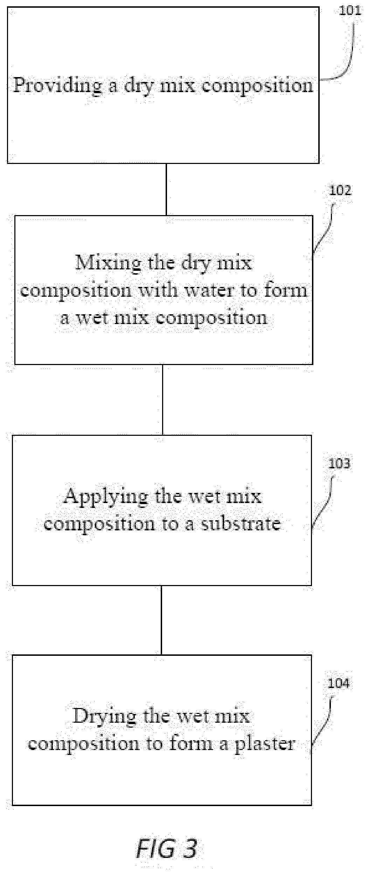

In another aspect, there is a process for preparing a lightweight plaster as shown in FIG. 3. The process 100 begins with a step 101, providing a dry mix composition according to embodiments of the present invention, as disclosed hereinabove. The process 100 can continue with step 102, mixing the dry mix composition with water to provide a wet mix composition.

In an embodiment, the wet mix can comprise 0.6 to 1.75 weight per weight of dry mix or 1.25 to 1.75 weight per weight of dry mix.

When hydrated, the hydratable binder of the dry mix can be altered. For example, dehydrated gypsum comprises calcium sulphate hemihydrate, that when hydrated, is converted into calcium sulphate dihydrate.

The process can continue with step 103, applying the wet mix composition to a substrate. The wet mix can be spray applied or hand applied. The substrate can be metal, steel, concrete, polystyrene, wood, or a composite.

The wet mix can be mixed with an accelerator composition, just prior to applying, or during the application process. The accelerator can comprise a low viscosity (20-40 cP) fluid. The accelerator can comprise aluminum sulphate powder mixed with water.

In another aspect, a kit comprises any of the aforementioned dry mixes, and an accelerator composition as per paragraph [0041].

The process can continue with step 104, drying the wet mix to form a plaster, converting the hydrated binder into a binder.

In an embodiment, the applied wet mix can have a particular setting time. The setting time can be between 10-20 hours.

In an embodiment the plaster can have a particular sprayed dry density. In an embodiment the spray dry density of the plaster may be 15 to 22 lbs./f$^3$.

In an embodiment, the plaster can be a fire-resistant plaster. Fire resistance can be measured according to EN 13381-4: Test Methods for Determining the Contribution of Structural Elements to Fire Resistance - Part 4: Passive Protection Applied to Steel Elements; or ANSI/UL 263, the Standard for Safety of Fire Tests of Building Construction Materials; or ASTM E119, Standard Test Methods for Fire Tests of Building Construction and Materials; or CAN/ULC-S101 Standard, Standard Methods of Fire Endurance Tests of Building Construction and Materials.

EMBODIMENTS

Many different aspects and embodiments are possible. Some of those aspects and embodiments are described herein. After reading this specification, skilled artisans will appreciate that those aspects and embodiments are only illustrative and do not limit the scope of the present invention. Embodiments may be in accordance with any one or more of the embodiments as listed below.

Embodiment 1. A dry mix composition comprising a hydratable binder and polymer beads, the polymer beads having a mean equivalent particle diameter of no greater than 2.5 mm and at least one of the following:

> 1) an aspect ratio of no greater than 1.5:1
> 2) an equivalent particle diameter standard deviation of no greater than 0.3 mm;
> 3) a circularity of at least 0.85;
> 4) an open cell content of no greater than 50 %; or
> 5) a packing density of at least 9 g/L.

Embodiment 2. The dry mix composition of embodiment 1, wherein the polymer beads comprise an expanded polymer, a non-expanded polymer, or a combination thereof.

Embodiment 3. The dry mix composition of embodiment 1 or 2, wherein the polymer beads comprise an expanded polymer.

Embodiment 4. The dry mix composition of any one of embodiments 1 to 3, wherein the polymer beads comprise polystyrene.

Embodiment 5. The dry mix composition of any one of embodiments 1 to 4, wherein the polymer beads comprise an expanded polystyrene.

Embodiment 6. The dry mix composition of any one of embodiments 1 to 5, wherein the polymer beads substantially consist of polystyrene.

Embodiment 7. The dry mix composition of any one of embodiments 1 to 6, wherein the polymer beads consist of polystyrene.

Embodiment 8. The dry mix composition of any one of embodiments 1 to 7, wherein the polymer beads comprise a non-shredded polymer.

Embodiment 9. The dry mix composition of any one of embodiments 1 to 8, wherein the polymer beads have a mean equivalent particle diameter of no greater than 2.4 mm or no greater than 2.3 mm or no greater than 2.2 mm or no greater than 2.1 mm or no greater than 2.0 mm or no greater than 1.9 mm or no greater than 1.8 mm.

Embodiment 10. The dry mix composition of any one of embodiments 1 to 9, wherein the polymer beads have a mean equivalent particle diameter of at least 0.001 mm or at least 0.01 mm or at least 0.1 mm or at least 1.0 mm or at least 1.1 mm or at least 1.2 mm or at least 1.3 mm or at least 1.4 mm or at least 1.5 mm.

Embodiment 11. The dry mix composition of any one of embodiments 1 to 10, wherein the polymer beads have an equivalent particle diameter standard deviation of no greater than 0.3 mm or no greater than 0.28 mm or no greater than 0.26 mm or no greater than 0.24 mm or no greater than 0.22 mm or no greater than 0.20 mm or no greater than 0.18 mm.

Embodiment 12. The dry mix composition of any one of embodiments 1 to 11, wherein the polymer beads have an equivalent particle diameter standard deviation of at least 0.001 mm or at least 0.01 mm or at least 0.1 mm.

Embodiment 13. The dry mix composition of any one of embodiments 1 to 12, wherein the polymer beads comprise a circularity of at least 0.85 or at least 0.86 or at least 0.87 or at least 0.88 or at least 0.89.

Embodiment 14. The dry mix composition of any one of embodiments 1 to 13, wherein the polymer beads comprise a circularity of no greater than or equal to 1 or no greater than 1. Embodiment 15. The dry mix composition of any one of embodiments 1 to 14, wherein the polymer beads have an aspect ratio of no greater than 5: 1 or no greater than 4:1 or no greater than 3: 1 or no greater than 2:1 or no greater than 1.5:1 or no greater than 1.3:1 or no greater than 1.1:1, or no greater than 1.05:1, or no greater than 1.01:1 ; and preferably at least 1:1.

Embodiment 16. The dry mix composition of any one of embodiments 1 to 15, wherein the polymer beads have an open cell content of no greater than 50% or no greater than 45% or no greater than 40% or no greater than 35% or no greater than 30% or no greater than 25% or no greater than 20% or no greater than 15% or no greater than 10% or no greater than 5% or substantially no open cell content.

Embodiment 17. The dry mix composition of any one of embodiments 1 to 16, wherein the polymer beads have a packing density of at least 10 g/L or at least 11 g/L or at least 12 g/L or at least 13 g/L.

Embodiment 18. The dry mix composition of any one of embodiments 1 to 17, wherein the polymer beads have a packing density of 100 g/L or no greater than 90 g/L or no greater than 80 g/L or no greater than 70 g/L or no greater than 60 g/L.

Embodiment 19. The dry mix composition of any one of embodiments 1 to 18, wherein the dry mix composition comprises at least 0.001 wt. % polymer beads or at least 0.01 wt. % polymer beads or at least 0.1 wt. % polymer beads or at least 0.5 wt. % polymer beads or at least 1 wt. % polymer beads or at least 1.5 wt. % polymer beads or at least 2 wt. % polymer beads or at least 2.5 wt. % polymer beads or at least 3 wt. % polymer beads, based on a total weight of the dry mix composition.

Embodiment 20. The dry mix composition of any one of embodiments 1 to 19, wherein the dry mix composition comprises no greater than 50 wt. % polymer beads or no greater than 40 wt. % polymer beads or no greater than 30 wt. % polymer beads or no greater than 20 wt. % polymer beads or no greater than 15 wt. % polymer beads or no greater than 10 wt. % polymer beads or no greater than 7 wt. % polymer beards, based on a total weight of the dry mix composition.

Embodiment 21. The dry mix composition of any one of embodiments 1 to 20, wherein the hydratable binder comprises gypsum, cement, lime, or a combination thereof.

Embodiment 22. The dry mix composition of any one of embodiments 1 to 21, wherein the hydratable binder comprises no greater than 5 wt. % cement or no greater than 4 wt. % cement, or no greater than 3 wt. % cement, or no greater than 2 wt. % cement, or no greater than 1 wt. % cement, or no greater than 0.5 wt. % cement, or no greater than 0.1 wt. % cement.

Embodiment 23. The dry mix composition of any one of embodiments 1 to 22, wherein the hydratable binder does not comprise cement.

Embodiment 24. The dry mix composition of any one of embodiments 1 to 23, wherein the dry mix composition comprises at least 70 wt. % hydratable binder or at least 72 wt. % hydratable binder or at least 74 wt. % hydratable binder or at least 76 wt. % hydratable binder or at least 78 wt. % hydratable binder or at least 80 wt. % hydratable binder or at least 82 wt. % hydratable binder or at least 84 wt. % hydratable binder or at least 85 wt. % hydratable binder, based on a total weight of the dry mix composition.

Embodiment 25. The dry mix composition of any one of embodiments 1 to 24, wherein the dry mix composition comprises no greater than 99 wt. % hydratable binder or no greater than 95 wt. % hydratable binder, based on a total weight of the dry mix composition.

Embodiment 26. The dry mix composition of any one of embodiments 1 to 25, wherein the dry mix composition further comprises a fibrous component.

Embodiment 27. The dry mix composition of embodiment 26, wherein the fibrous component comprises cellulose fibers, glass fibers, or a combination thereof.

Embodiment 28. The dry mix composition of embodiment 26 or 27, wherein the dry mix composition comprises 0-20 wt. % cellulose or 4-20 wt. % cellulose, based on a total weight of the dry mix composition.

Embodiment 29. The dry mix composition of any one of embodiments 26 to 28, wherein the dry mix composition comprises 0-2 wt. % glass fibers, based on a total weight of the dry mix composition.

Embodiment 30. The dry mix composition of any one of embodiments 1 to 29, wherein the composition further comprises a foaming agent.

Embodiment 31. The dry mix composition of embodiment 30, wherein the foaming agent comprises sodium alpha olefin sulfonates, sulfonated monoglycerides, sodium alkyl arylsulfonate, sodium laurel sulfate, or a combination thereof.

Embodiment 32. The dry mix composition of embodiment 30 or 31, wherein the dry mix composition comprises 0.1-5% by wt. foaming agent, based on a total weight of the dry mix composition.

Embodiment 33. The dry mix composition of any one of embodiments 1 to 32, wherein the dry mix composition further comprises an accelerator.

Embodiment 34. The dry mix composition of any one of embodiments 1 to 33, wherein the dry mix composition further comprises a clay.

Embodiment 35. The dry mix composition of embodiment 34, wherein the clay comprises attapulgite, sepiolite, bentonite, illite, or a combination thereof.

Embodiment 36. The dry mix composition of embodiment 34 or 35, wherein the dry mix composition comprises 1 to 12 wt. % clay or 4 to 8 wt. % clay, based on a total weight of the dry mix composition.

Embodiment 37. The dry mix composition of any one of embodiments 1 to 36, wherein the composition further comprises a reactive filler.

Embodiment 38. The dry mix composition of embodiment 37, wherein the reactive filler comprises calcium carbonate, sodium bicarbonate, or a combination thereof.

Embodiment 39. The dry mix composition of embodiment 37 or 38, wherein the reactive filler comprises a particle size of 1 to 500 microns or 10 to 20 microns.

Embodiment 40. The dry mix composition of any one of embodiments 37 to 39, wherein the dry mix composition comprises 1-10 wt. % reactive filler or 3-5 wt. % reactive filler.

Embodiment 41. The dry mix composition of any one of embodiments 1 to 40, wherein the dry mix composition further comprises a lightweight filler.

Embodiment 42. The dry mix composition of embodiment 41, wherein the lightweight filler comprises expanded perlite, expanded vermiculite, shredded expanded polystyrene, stone wool, expanded glass beads, cenospheres, micronized rubber, or a combination thereof.

Embodiment 43. The dry mix composition of embodiment 41 or 42, wherein the dry mix composition comprises no greater than 5 wt. % lightweight filler other than polystyrene beads, or no greater than 4 wt. % lightweight filler, or no greater than 3 wt. % lightweight filler, or no greater than 2 wt. % lightweight filler, or no greater than 1 wt. % lightweight filler, or no greater than 0.5 wt. % lightweight filler, or no greater than 0.1 wt. % lightweight filler.

Embodiment 44. The dry mix composition of any one of embodiments 1 to 40, wherein the dry mix composition comprises no lightweight fillers other than polymer or polystyrene beads.

Embodiment 45. The dry mix composition of any one of embodiments 1 to 44, wherein the dry mix composition further comprises an inert filler.

Embodiment 46. The dry mix composition of embodiment 45, wherein the inert filler comprises dolomite, limestone, sand, silica, bauxite or a combination thereof.

Embodiment 47. The dry mix composition of embodiment 45 or 46, wherein the dry mix composition comprises contain no greater than 5 wt. % inert filler other than polystyrene beads, or no greater than 4 wt. % inert filler, or no greater than 3 wt. % inert filler, or no greater than 2 wt. % inert filler, or no greater than 1 wt. % inert filler, or no greater than 0.5 wt. % inert filler, or no greater than 0.1 wt. % inert filler other than polystyrene beads.

Embodiment 48. The dry mix composition of any one of embodiments 1 to 44, wherein the dry mix comprises no inert fillers other than polymer or polystyrene beads.

Embodiment 49. The dry mix composition of any one of embodiments 1 to 48, wherein the dry mix composition comprises no greater than 5 wt. % aggregates other than polystyrene beads, or no greater than 4 wt. % aggregates, or no greater than 3 wt. % aggregates, or no greater than 2 wt. % aggregates, or no greater than 1 wt. % aggregates, or no greater than 0.5 wt. % aggregates, or no greater than 0.1 wt. % aggregates.

Embodiment 50. The dry mix composition of any one of embodiments 1 to 49, wherein the dry mix composition comprises no greater than 5 wt. % sands other than polystyrene beads, or no greater than 4 wt. % sands, or no greater than 3 wt. % sands, or no greater than 2 wt. % sands, or no greater than 1 wt. % sands, or no greater than 0.5 wt. % sands, or no greater than 0.1 wt. % sands.

Embodiment 51. The dry mix composition of any one of embodiments 1 to 48, wherein the dry mix comprises no aggregates other than polymer or polystyrene beads.

Embodiment 52. The dry mix composition of any one of embodiments 1 to 51, further comprising an additive.

Embodiment 53. The dry mix composition of embodiment 52, wherein the additive comprises fire resistive aggregates, flake mica, a super absorbent polymer, or a combination thereof.

Embodiment 54. The dry mix composition of any one of embodiments 1 to 53, wherein the dry mix composition has a dry bulk density of 15 to 16 lbs./f$^3$.

Embodiment 55. A kit comprising the dry mix composition of any one of embodiments 1-54 and an accelerator composition.

Embodiment 56. The kit of embodiment 55, wherein the accelerator composition comprises a fluid having viscosity in a range of 20-40 cP.

Embodiment 57. The kit of embodiment 55 or 56, wherein the accelerator composition comprises aluminum sulphate and water.

Embodiment 58. A wet mix composition comprising the dry mix composition of any one of embodiments 1-54 and water.

Embodiment 59. The wet mix composition of embodiment 58, wherein the wet mix comprises 0.6 to 1.75 weight per weight of dry mix or 1.25 to 1.75 weight per weight of dry mix or 1.25 to 1.75 weight water per weight dry mix.

Embodiment 60. The wet mix composition of embodiment 58 or 59, wherein the wet mix has a setting time of 10 to 20 hours.

Embodiment 61. A method of preparing a plaster comprising:

preparing a dry mix composition comprising a hydratable binder and polymer beads, the polymer beads having a mean equivalent particle diameter of no greater than 2.5 mm and at least one of the following:

1) an aspect ratio of no greater than 1.5:1.
2) an equivalent particle diameter standard deviation of no greater than 0.3 mm;
3) a circularity of at least 0.85;
4) an open cell content of no greater than 50 %; or
5) a packing density of at least 9 g/L,

mixing the dry mix composition with water to prepare a wet mix composition,
applying the wet mix composition to a surface of a substrate,
allowing the wet mix composition to dry to form a plaster.

Embodiment 62. The method of embodiment 61, wherein the wet mix has a setting time of 10 to 20 hours.

Embodiment 63. The method of embodiment 61 or 62, wherein the dry mix composition comprises the dry mix composition of any one of embodiments 1-54.

Embodiment 64. The method of any one of embodiments 61 to 63, wherein the wet mix composition comprises the wet mix composition of any one of embodiments 58-60.

Embodiment 65. The method of any one of embodiments 61 to 64, wherein the wet mix composition is mixed with an accelerator composition prior to or during application of the wet mix to the surface of the substrate.

Embodiment 66. The method of embodiment 65, wherein the accelerator composition comprises a fluid having viscosity in a range of 20-40 cP.

Embodiment 67. The method of embodiment 65 or 66, wherein the accelerator composition comprises aluminum sulphate and water.

Embodiment 68. The method of any one of embodiments 61 to 67, wherein the step of applying comprises applying by hand or spray applying or a combination thereof.

Embodiment 69. The method of any one of embodiments 61 to 68, wherein the substrate comprises metal, steel, concrete, polystyrene, wood, or a composite.

Embodiment 69bis. A plaster made by a method as defined in any one of embodiments 61 to 69.

Embodiment 69ter. A plaster formed from a dry mix composition as defined in any one of embodiments 1 to 54.

Embodiment 70. A plaster having a composition comprising a binder and polymer beads, the polymer beads having a mean equivalent particle diameter of no greater than 2.5 mm and at least one of the following:

1) an aspect ratio of no greater than 1.5:1;
2) an equivalent particle diameter standard deviation of no greater than 0.3 mm;
3) a circularity of at least 0.85;
4) an open cell content of no greater than 50%; or
5) a packing density of at least 9 g/L.

Embodiment 71. The plaster of embodiment 70, wherein the polymer beads comprise an expanded polymer, a non-expanded polymer, or a combination there.

Embodiment 72. The plaster of embodiment 70 or 71, wherein the polymer beads comprise an expanded polymer.

Embodiment 73. The plaster of any one of embodiments 70 to 72, wherein the polymer beads comprise polystyrene.

Embodiment 74. The plaster of any one of embodiments 70 to 73, wherein the polymer beads comprise expanded polystyrene.

Embodiment 75. The plaster of any one of embodiments 70 to 74, wherein the polymer beads substantially consist of polystyrene.

Embodiment 76. The plaster of any one of embodiments 70 to 75, wherein the polymer beads consist of polystyrene.

Embodiment 77. The plaster of any one of embodiments 70 to 76, wherein the polymer beads comprise a non-shredded polymer.

Embodiment 78. The plaster of any one of embodiments 70 to 77, wherein the polymer beads have a mean equivalent particle diameter of no greater than 2.4 mm or no greater than 2.3 mm or no greater than 2.2 mm or no greater than 2.1 mm or no greater than 2.0 mm or no greater than 1.9 mm or no greater than 1.8 mm.

Embodiment 79. The plaster of any one of embodiments 70 to 78, wherein the polymer beads have a mean equivalent particle diameter of at least 0.001 mm or at least 0.01 mm or at least 0.1 mm or at least 1.0 mm or at least 1.1 mm or at least 1.2 mm or at least 1.3 mm or at least 1.4 mm or at least 1.5 mm.

Embodiment 80. The plaster of any one of embodiments 70 to 79, wherein the polymer beads comprise a equivalent particle diameter standard deviation of no greater than 0.3 mm or no greater than 0.28 mm or no greater than 0.26 mm or no greater than 0.24 mm or no greater than 0.22 mm or no greater than 0.20 mm or no greater than 0.18 mm.

Embodiment 81. The plaster of any one of embodiments 70 to 80, wherein the polymer beads comprise an equivalent particle diameter standard deviation of at least 0.001 mm or at least 0.01 mm or at least 0.1 mm.

Embodiment 82. The plaster of any one of embodiments 70 to 81, wherein the polymer beads comprise a circularity of at least 0.85 or at least 0.86 or at least 0.87 or at least 0.88 or at least 0.89.

Embodiment 83. The plaster of any one of embodiments 70 to 82, wherein the polymer beads comprise a circularity of no greater than or equal to 1 or no greater than 1.

Embodiment 84. The plaster of any one of embodiments 70 to 83, wherein the polymer beads have a primary aspect ratio of no greater than 5:1 or no greater than 4: 1 or no greater than 3: 1 or no greater than 2:1 or no greater than 1.5:1 or no greater than 1.3: 1 or no greater than 1.1:1, or no greater than 1.05:1 or no greater than 1.01:1 ; and preferably at least 1:1.

Embodiment 85. The plaster of any one of embodiments 70 to 84, wherein the polymer beads have an open cell content of no greater than no greater than 50% or no greater than 45% or no greater than 40% or no greater than 35% or no greater than 30% or no greater than 25% or no greater than 20% or no greater than 15% or no greater than 10% or no greater than 5% or substantially no open cell content.

Embodiment 86. The plaster of any one of embodiments 70 to 85, wherein the polymer beads have a packing density of at least 10 g/L or at least 11 g/L or at least 12 g/L or at least 13 g/L.

Embodiment 87. The plaster of any one of embodiments 70 to 86, wherein the polymer beads have a packing density of 100 g/L or no greater than 90 g/L or no greater than 80 g/L or no greater than 70 g/L or no greater than 60 g/L.

Embodiment 88. The plaster of any one of embodiments 70 to 87, wherein the plaster comprises at least 0.001 wt. % polymer beads or at least 0.01 wt. % polymer beads or at least 0.1 wt. % polymer beads or at least 0.5 wt. % polymer beads or at least 1 wt. % polymer beads or at least 1.5 wt. % polymer beads or at least 2 wt. % polymer beads or at least 2.5 wt. % polymer beads or at least 3 wt. % polymer beads, based on a total weight of the plaster.

Embodiment 89. The plaster of any one of embodiments 70 to 88, wherein the plaster comprises no greater than 50 wt. % polymer beads or no greater than 40 wt. % polymer beads or no greater than 30 wt. % polymer beads or no greater than 20 wt. % polymer beads or no greater than 15 wt. % polymer beads or no greater than 10 wt. % polymer beads or no greater than 7 wt. % polymer beards, based on a total weight of the plaster.

Embodiment 90. The plaster of any one of embodiments 70 to 89, wherein the plaster comprises at least 70 wt. % binder or at least 72 wt. % binder or at least 74 wt. % binder or at least 76 wt. % binder or at least 78 wt. % binder or at least 80 wt. % binder or at least 82 wt. % binder or at least 84 wt. % binder or at least 85 wt. % binder, based on a total weight of the plaster.

Embodiment 91. The plaster of any one of embodiments 70 to 90, wherein the plaster comprises no greater than 99 wt. % binder or no greater than 95 wt. % binder, based on a total weight of the plaster.

Embodiment 92. The plaster of any one of embodiments 70 to 91, wherein the binder comprises gypsum, cement, lime, or a combination thereof.

Embodiment 93. The plaster of any one of embodiments 70 to 92, wherein the binder comprises no greater than 5 wt. % cement or no greater than 4 wt. % cement, or no greater than 3 wt. % cement, or no greater than 2 wt. % cement, or no greater than 1 wt. % cement, or no greater than 0.5 wt. % cement, or no greater than 0.1 wt. % cement.

Embodiment 94. The plaster of any one of embodiments 70 to 93, wherein the binder does not comprise cement.

Embodiment 95. The plaster of any one of embodiments 70 to 94, wherein the plaster further comprises a fibrous component.

Embodiment 96. The plaster of embodiment 95, wherein the fibrous component comprises cellulose fibers, glass fibers, or a combination thereof.

Embodiment 97. The plaster of embodiment 95 or 96, wherein plaster comprises 0-20 wt. % cellulose or 4-20 wt. % cellulose, based on a total weight of the plaster.

Embodiment 98. The plaster of any one of embodiments 95 to 97, wherein the plaster comprises 0-2 wt. % glass fibers.

Embodiment 99. The plaster of any one of embodiments 70 to 98, wherein the plaster further comprises an accelerator.

Embodiment 100. The plaster of any one of embodiments 70 to 99, wherein the plaster further comprises a clay.

Embodiment 101. The plaster of embodiment 100, wherein the clay comprises attapulgite, sepiolite, bentonite, illite, or a combination thereof.

Embodiment 102. The plaster of embodiment 100 or 101, wherein the plaster comprises 1 to 12 wt. % clay or 4 to 8 wt. % clay, based on a total weight of the plaster.

Embodiment 103. The plaster of any one of embodiments 70 to 102, wherein the composition further comprises a reactive filler.

Embodiment 104. The plaster of embodiment 103, wherein the reactive filler comprises calcium carbonate, sodium bicarbonate, or a combination thereof.

Embodiment 105. The plaster of embodiment 103 or 104, wherein the reactive filler comprises a particle size of 1 to 500 microns or 10 to 20 microns.

Embodiment 106. The plaster of any one of embodiments 103 to 105, wherein the dry mix composition comprises 1-10 wt. % reactive filler or 3-5 wt. % reactive filler.

Embodiment 107. The plaster of any one of embodiments 70 to 106, wherein the dry mix composition further comprises a lightweight filler.

Embodiment 108. The plaster of embodiment 107, wherein the lightweight filler comprises expanded perlite, expanded vermiculite, shredded expanded polystyrene, stone wool, expanded glass beads, cenospheres, micronized rubber, or a combination thereof.

Embodiment 109. The plaster of embodiment 107 or 108, wherein the dry mix composition comprises no greater than 5 wt. % lightweight filler other than polystyrene beads, or no greater than 4 wt. % lightweight filler, or no greater than 3 wt. % lightweight filler, or no greater than 2 wt. % lightweight filler, or no greater than 1 wt. % lightweight filler, or no greater than 0.5 wt. % lightweight filler, or no greater than 0.1 wt. % lightweight filler.

Embodiment 110. The plaster of any one of embodiments 70 to 106, wherein the dry mix composition comprises no lightweight fillers other than polymer or polystyrene beads.

Embodiment 111. The plaster of any one of embodiments 70 to 110, wherein the dry mix composition further comprises an inert filler.

Embodiment 112. The plaster of embodiment 111, wherein the inert filler comprises dolomite, limestone, sand, silica, bauxite, or a combination thereof.

Embodiment 113. The plaster of embodiment 111 or 112, wherein the dry mix composition comprises contain no greater than 5 wt. % inert filler other than polystyrene beads, or no greater than 4 wt. % inert filler, or no greater than 3 wt. % inert filler, or no greater than 2 wt. % inert filler, or no greater than 1 wt. % inert filler, or no greater than 0.5 wt. % inert filler, or no greater than 0.1 wt. % inert filler other than polystyrene beads.

Embodiment 114. The plaster of any one of embodiments 70 to 110, wherein the dry mix comprises no inert fillers other than polymer or polystyrene beads.

Embodiment 115. The plaster of any one of embodiments 70 to 114, wherein the dry mix composition comprises no greater than 5 wt. % aggregates other than polystyrene beads, or no greater than 4 wt. % aggregates, or no greater than 3 wt. % aggregates, or no greater than 2 wt. % aggregates, or no greater than 1 wt. % aggregates, or no greater than 0.5 wt. % aggregates, or no greater than 0.1 wt. % aggregates.

Embodiment 116. The plaster of any one of embodiments 70 to 115, wherein the dry mix composition comprises no greater than 5 wt. % sands other than polystyrene beads, or no greater than 4 wt. % sands, or no greater than 3 wt. % sands, or no greater than 2 wt. % sands, or no greater than 1 wt. % sands, or no greater than 0.5 wt. % sands, or no greater than 0.1 wt. % sands.

Embodiment 117. The plaster of any one of embodiments 70 to 114, wherein the dry mix comprises no aggregates other than polymer or polystyrene beads.

Embodiment 118. The plaster of any one of embodiments 70 to 117, further comprising an additive.

Embodiment 119. The plaster of embodiment 118, wherein the additive comprises fire resistive aggregates, flake mica, a super absorbent polymer, or a combination thereof.

Embodiment 120. The plaster of any one of embodiments 70 to 119, further comprising aluminum sulphate.

Embodiment 121. The plaster of any one of embodiments 70 to 120, wherein the plaster is a fire-resistant plaster.

EXAMPLES

Example 1 - Large vs small beads

Dry mix compositions for samples S1, comparative sample CS1, and commercial sample CMS1 were prepared according to Table 1 below.

Table 1

| Component | S1 | CS1 | CMS1 |
|---|---|---|---|
| | Wt. % | Wt. % | Wt. % |
| Gypsum Hemihydrate | 88 | 88 | 66 |
| Calcium Sulfate Anhydrite | 9 | 9 | 9 |
| Expanded perlite | 0 | 0 | 10 |
| Stone wool | 0 | 0 | 15 |
| Fine expanded polystyrene beads | 3 | 0 | 0 |
| Coarse expanded polystyrene beads | 0 | 3 | 0 |
| Other additives | 1,77 | 1,77 | 1,77 |

Properties of the polystyrene beads can be seen below in Table 2.

Table 2

| Beads | Mean equivalent diameter | Standard deviation of diameter distribution | Mean circularity |
|---|---|---|---|
| Fine | 1.72 mm | 0.03 mm | 0.89 |

(continued)

| Beads | Mean equivalent diameter | Standard deviation of diameter distribution | Mean circularity |
|---|---|---|---|
| Coarse | 2.68 mm | 0.04 mm | 0.9 |

Sample S1 and comparative sample CS1 were mixed with 0.68 weight water per weight dry mix untill the wet mix was hydrated and homogenous. Commercial samples CMS were mixed with 0.89 weight water per weight dry mix untill the wet mix was hydrated and homogenous.

All samples were spray applied to a substrate. However, smaple CS1 was unable to flow consistently through the sprayer.

Example 2 - Vicat testing.

Dry mix compositions for samples S1, comparative sample CS1, and commercial sample CMS1 were prepared according to Table 3 below.

Table 3

| Component | CS2 | S2 | S3 | S4 |
|---|---|---|---|---|
| | Wt. % | Wt. % | Wt. % | Wt. % |
| Shredded expanded polystyrene | 3 | 0 | 0 | 0 |
| Fine expanded polystyrene beads | 0 | 4 | 4 | 4 |
| Stucco | 87 | 86 | 86 | 86 |
| Cellulose fiber | 5 | 5 | 5 | 5 |
| Calcium Carbonate | 4 | 4 | 4 | 4 |
| Other Additives | 1 | 1 | 1 | 1 |
| Clay | 0 | 0 | 5 | 10 |

All samples and comparative samples were mixed with 1.3 weight water per weight dry mix in a Putzmeister mixer and pump untill the wet mix was hydrated and homogenous.

Wet mixes were vicat tested according to a modified ASTM C472 Physical Testing of Gypsum, Gypsum Plasters and Concrete. A 5 oz dixie cup was filled completely with the wet mix and placed under a Vicat Cone Penetrometer (a modified Vicat Apparatus with a 50 gram cone weight (50 grams = weight of cone + weight of Vicat shaft + weight of pointer and thumbscrew). Humbolt Mfg. Co. Catalog #H-3137 or equivalent). Vicat results for each mix were recorded as shown below in Table 4.

Each wet mix was also sprayed via the putzmeister mixer and pump. The sprayed wet mixes were collected and used to fill additional 5 oz dixie cups for spray Vicat testing. Results can be seen below in Table 4.

Table 4

| Vicat testing | Mixer Vicat (mm) | Sprayed Vicat (mm) |
|---|---|---|
| CS2 | 29 | 25 |
| S2 | 35 | 31 |
| S3 | 32 | 31 |
| S4 | 31 | 26 |

**Claims**

1. A dry mix composition comprising a hydratable binder and polymer beads, the polymer beads having a mean equivalent particle diameter of no greater than 2.5 mm and at least one of the following:

1) an aspect ratio of no greater than 1.5:1
2) an equivalent particle diameter standard deviation of no greater than 0.3 mm;
3) a circularity of at least 0.85;
4) an open cell content of no greater than 50 %; or
5) a packing density of at least 9 g/L.

2. The dry mix composition of claim 1, wherein the polymer beads consist of polystyrene.

3. The dry mix composition of claim 1 or 2, wherein the polymer beads consist of expanded polystyrene.

4. The dry mix composition of any one of claims 1 to 3, wherein the polymer beads have a mean equivalent particle diameter of:

- at least 0.001 mm, preferably at least 0.01 mm or at least 0.1 mm or at least 1.0 mm or at least 1.1 mm or at least 1.2 mm or at least 1.3 mm or at least 1.4 mm or at least 1.5 mm; and
- no greater than 2.4 mm, preferably no greater than 2.3 mm or no greater than 2.2 mm or no greater than 2.1 mm or no greater than 2.0 mm or no greater than 1.9 mm or no greater than 1.8 mm.

5. The dry mix composition any one of claims 1 to 4, wherein the polymer beads have an equivalent particle diameter standard deviation of:

- at least 0.001 mm, preferably at least 0.01 mm or at least 0.1 mm; and
- no greater than 0.3 mm, preferably no greater than 0.28 mm or no greater than 0.26 mm or no greater than 0.24 mm or no greater than 0.22 mm or no greater than 0.20 mm or no greater than 0.18 mm.

6. The dry mix composition of any one of claims 1 to 5, wherein the polymer beads comprise a circularity of:

- at least 0.85, preferably at least 0.86 or at least 0.87 or at least 0.88 or at least 0.89; and
- no greater than or equal to 1, preferably no greater than 1.

7. The dry mix composition of any one of claims 1 to 6, wherein the polymer beads have an aspect ratio of:

- no greater than 1.5:1, preferably no greater than 1.3:1 or no greater than 1.1:1 or no greater than 1.05: 1 or no greater than 1.01: 1 ; and
- preferably at least 1:1.

8. The dry mix composition of any one of claims 1 to 7, wherein the polymer beads have an open cell content of no greater than 50%, preferably no greater than 45% or no greater than 40% or no greater than 35% or no greater than 30% or no greater than 25% or no greater than 20% or no greater than 15% or no greater than 10% or no greater than 5% or substantially no open cell content.

9. The dry mix composition of any one of claims 1 to 8, wherein the polymer beads have a packing density of:

- at least 10 g/L, preferably at least 11 g/L or at least 12 g/L or at least 13 g/L; and
- no greater than 100 g/L, preferably or no greater than 90 g/L or no greater than 80 g/L or no greater than 70 g/L or no greater than 60 g/L.

10. The dry mix composition of any one of claims 1 to 9, wherein the dry mix composition comprises:

- at least 0.001 wt. % polymer beads, preferably at least 0.01 wt. % polymer beads or at least 0.1 wt. % polymer beads or at least 0.5 wt. % polymer beads or at least 1 wt. % polymer beads or at least 1.5 wt. % polymer beads or at least 2 wt. % polymer beads or at least 2.5 wt. % polymer beads or at least 3 wt. % polymer beads, based on a total weight of the dry mix composition; and
- no greater than 50 wt. % polymer beads, preferably no greater than 40 wt. % polymer beads or no greater than 30 wt. % polymer beads or no greater than 20 wt. % polymer beads or no greater than 15 wt. % polymer beads or no greater than 10 wt. % polymer beads or no greater than 7 wt. % polymer beards, based on a total weight of the dry mix composition.

11. The dry mix composition of any one of claims 1 to 10, wherein the hydratable binder comprises gypsum, cement, lime, or a combination thereof.

12. The dry mix composition of any one of claims 1 to 11, wherein the hydratable binder does not comprise cement.

13. The dry mix composition of any one of claims 1 to 12, wherein the compositon further comprises a reactive filler, which preferably comprises calcium carbonate, sodium bicarbonate, or a combination thereof.

14. The dry mix composition of any one of claims 1 to 13, wherein the dry mix comprises no inert fillers other than polymer or polystyrene beads.

15. The dry mix composition of any one of claims 1 to 14, wherein the dry mix composition further comprises one or more of the following:

    - a fibrous component, such as cellulose fibers, glass fibers, or a combination thereof;
    - a foaming agent;
    - an accelerator;
    - a clay, such as attapulgite, sepiolite, bentonite, illite, or a combination thereof.

16. A kit comprising the dry mix composition of any one of claims 1 to 15 and an accelerator composition, wherein said accelerator composition preferably comprises aluminium sulphate and water.

17. A method of preparing a plaster comprising:

    preparing a dry mix composition as defined in any one of claims 1 to 15,
    mixing the dry mix composition with water to prepare a wet mix composition,
    applying the wet mix composition to a surface of a substrate,
    allowing the wet mix composition to dry to form a plaster.

18. A plaster obtained by a method as defined in claim 17.

*FIG 1*

*FIG 2*

Providing a dry mix composition — 101

Mixing the dry mix composition with water to form a wet mix composition — 102

Applying the wet mix composition to a substrate — 103

Drying the wet mix composition to form a plaster — 104

FIG 3

Europäisches
Patentamt

European
Patent Office

Office européen
des brevets

# EUROPEAN SEARCH REPORT

**Application Number**

EP 24 20 1982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/076726 A1 (MATHIEU MARIE-ANDRÉE [CA]) 19 March 2015 (2015-03-19) * the whole document * ----- | 1-18 | INV. C04B28/02 C04B28/14 C04B28/18 |
| A | CN 114 667 274 A (SHENGOBI WEBER COMPANY) 24 June 2022 (2022-06-24) * the whole document * ----- | 1-18 | |

**TECHNICAL FIELDS SEARCHED (IPC)**

C04B

The present search report has been drawn up for all claims

| Place of search | Date of completion of the search | Examiner |
|---|---|---|
| Munich | 14 May 2025 | Roesky, Rainer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 1982

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | | Publication date |
|---|---|---|---|---|
| US 2015076726 A1 | 19-03-2015 | NONE | | |
| CN 114667274 A | 24-06-2022 | CN 114667274 A | | 24-06-2022 |
| | | EP 4065538 A1 | | 05-10-2022 |
| | | FR 3103484 A1 | | 28-05-2021 |
| | | WO 2021105207 A1 | | 03-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5352390 A
- US 4751024 A
- US 3719573 A
- US 3839059 A